# EUROPÄISCHE PATENTSCHRIFT

(11) **EP 4 141 230 B1**
(45) Veröffentlichungstag und Bekanntmachung des Hinweises auf die Patenterteilung: **12.06.2024**
(21) Anmeldenummer: 22187409.2
(22) Anmeldetag: 28.07.2022
(51) Int. Cl.: F01N 3/20

(54) **ABGASHEIZER**
EXHAUST HEATER
CHAUFFAGE POUR GAZ D'ÉCHAPPEMENT

(30) Priorität: 26.08.2021 DE 102021122086
(43) Veröffentlichungstag der Anmeldung: 01.03.2023
(73) Patentinhaber: Purem GmbH, 66539 Neunkirchen (DE)
(72) Erfinder: Hammer, Jochen, Stuttgart (DE)
(74) Vertreter: Ruttensperger Lachnit Trossin Gomoll

(56) Entgegenhaltungen:
- EP-A1- 3 825 528
- EP-A1- 3 901 433
- JP-A- H04 164 115

## Beschreibung

Die vorliegende Erfindung betrifft einen Abgasheizer, mit welchem in einer Abgasanlage eines Kraftfahrzeugs Wärme auf das darin strömende, von einer Brennkraftmaschine ausgestoßene Abgas übertragen werden kann, um dadurch insbesondere in einer Startphase des Betriebs einer Brennkraftmaschine stromabwärts bezüglich des Abgasheizers angeordnete Systembereiche, wie zum Beispiel Katalysatoren oder Partikelfilter, schneller auf Betriebstemperatur zu bringen.

Aus der nachveröffentlichten deutschen Patentanmeldung DE 10 2021 109 568 ist ein Abgasheizer bekannt, bei welchem zwischen zwei aus Blechmaterial aufgebauten, im Wesentlichen plattenartigen Trägerelementen einer Trägeranordnung zwei durch Heraustrennen aus einem Flachmaterial bereitgestellte, im Wesentlichen plattenartig bzw. flächig ausgebildete Heizleiter einer Heizleiteranordnung in einer einer Abgasheizer-Längsrichtung entsprechenden Abgas-Hauptströmungsrichtung aufeinander folgend angeordnet sind. Durch eine Verbindungsanordnung mit einer Mehrzahl von bolzenartig ausgebildeten Verbindungselementen ist der geschichtete Aufbau von Trägerelementen und dazwischen angeordneten Heizleitern zusammengehalten. Um eine elektrische Isolierung der Heizleiter bezüglich der Trägerelemente bzw. auch bezüglich einander zu erreichen, sind zwischen diesen jeweils mehrere Abstützeinheiten aus elektrisch isolierendem Material, beispielsweise Keramikmaterial, angeordnet.

Ein Abgasheizer gemäß dem Oberbegriff des Anspruchs 1 ist aus der EP 3 825 528 A1 bekannt. Ein spiralartig gewundener Heizleiter einer Heizleiteranordnung dieses Abgasheizers ist auf einem kegelartig geformten Träger elektrisch isoliert getragen. Hierzu sind an definierten Umfangsbereichen der Windungsabschnitte des Heizleiters Gruppen von radial gestaffelt liegenden Isolierelementen vorgesehen, über welche der Heizleiter an dem Träger abgestützt ist. Diese Isolierelemente umfassen jeweils eine mit Metallmaterial aufgebaute Hülse, welche den Heizleiter unter Zwischenlagerung von elektrisch isolierendem Material umgibt.

Es ist die Aufgabe der vorliegenden Erfindung, einen Abgasheizer bereitzustellen, bei welchem die Abstützung eines oder mehrerer Heizleiter an einer Trägeranordnung bzw. an einem anderen Heizleiter in auch bei hohen Betriebstemperaturen dauerhaft stabiler Art und Weise realisiert ist.

Erfindungsgemäß wird diese Aufgabe gelöst durch einen Abgasheizer für eine Abgasanlage einer Brennkraftmaschine, umfassend:
- eine Trägeranordnung,
- eine an der Trägeranordnung getragene Heizleiteranordnung mit wenigstens einem stromdurchflossenen Heizleiter, wobei wenigstens ein Heizleiter bezüglich der Trägeranordnung durch wenigstens eine Trägeranordnung-Abstützeinheit elektrisch isoliert getragen ist oder/und wobei wenigstens ein Heizleiter bezüglich eines weiteren Heizleiters durch eine Heizleiter-Abstützeinheit elektrisch isoliert getragen ist,
wobei wenigstens eine Trägeranordnung-Abstützeinheit eine auf die Trägeranordnung aufgebrachte Isolierbeschichtung umfasst.

Bei einem erfindungsgemäß aufgebauten Abgasheizer besteht ein fester Verbund einer jeweiligen Isolierbeschichtung nur mit derjenigen Komponente zweier bezüglich einander elektrisch isoliert abzustützender Komponenten, auf welche die Isolierbeschichtung aufgebracht ist. Bezüglich der anderen der Komponenten besteht eine feste Verbindung nicht, so dass insbesondere durch Vibrationen oder unterschiedliche thermische Ausdehnungen induzierte Relativbewegungen zwischen den bezüglich einander abzustützenden Komponenten ohne das Entstehen von mechanischen Spannungen ermöglicht sind.

Erfindungsgemäß kann weiter vorgesehen sein, dass wenigstens eine Trägeranordnung-Abstützeinheit auf den über diese Trägeranordnung-Abstützeinheit an der Trägeranordnung abgestützten Heizleiter aufgebrachte Isolierbeschichtung umfasst, oder/und dass wenigstens eine Heizleiter-Abstützeinheit eine auf einen der durch diese Heizleiter-Abstützeinheit bezüglich einander abgestützten Heizleiter aufgebrachte Isolierbeschichtung oder/und eine auf den anderen der durch diese Heizleiter-Abstützeinheit bezüglich einander abgestützten Heizleiter aufgebrachte Isolierbeschichtung umfasst.

Ein fester Verbund einer derartigen Isolierbeschichtung mit der diese aufnehmenden Komponente kann beispielsweise dadurch realisiert werden, dass wenigstens eine, vorzugsweise jede Isolierbeschichtung durch Abscheiden, beispielsweise Gasphasenabscheiden, oder durch Auftragen in fließfähigem Zustand aufgebracht ist.

Zum Bereitstellen einer mechanisch stabilen, temperaturresistenten, gleichwohl gut elektrisch isolierenden Beschichtung kann wenigstens eine, vorzugsweise jede Isolierbeschichtung mit anorganischem Isoliermaterial, vorzugsweise Keramikmaterial, aufgebaut sein.

Für einen stabilen Aufbau eines Abgasheizers kann die Trägeranordnung zwei die Heizleiteranordnung in Richtung einer Abgasheizer-Längsachse zwischen sich aufnehmende Trägerelemente umfassen. Dabei kann wenigstens eine, vorzugsweise jede Trägeranordnung-Abstützeinheit eine auf eines der Trägerelemente aufgebrachte Isolierbeschichtung umfassen.

Alternativ oder zusätzlich kann vorgesehen sein, dass wenigstens eine, vorzugsweise jede Trägeranordnung-Abstützeinheit eine auf einen Heizleiter der Heizleiteranordnung aufgebrachte Isolierbeschichtung umfasst.

Zum Erhalt eines festen, gleichwohl elektrisch isolierten Verbundes der Trägeranordnung mit der Heizleiteranordnung kann die Heizleiteranordnung vermittels einer Mehrzahl bolzenartiger Verbindungselemente mit der Trägeranordnung verbunden sein, wobei wenigstens ein, vorzugsweise jedes Verbindungselement wenigstens einen, vorzugsweise jeden Heizleiter der Heizleiteranordnung im Bereich einer Verbindungselementöffnung durchsetzt. Dabei kann wenigstens ein, vorzugsweise jedes Verbindungselement in seinem eine Verbindungselementöffnung durchsetzenden Längenbereich von einem Isolierelement umgeben sein.

Die Erfindung betrifft ferner eine Abgasanlage für eine Brennkraftmaschine, umfassend wenigstens einen erfindungsgemäß aufgebauten Abgasheizer.

Die vorliegende Erfindung wird nachfolgend mit Bezug auf die beiliegenden Figuren detailliert beschrieben. Es zeigt:
- Fig. 1: eine perspektivische Ansicht eines Abgasheizers;
- Fig. 2: eine Längsschnittansicht des Abgasheizers der Fig. 1;
- Fig. 3: eine Detailansicht eines Abgasheizers mit einem zwischen zwei Trägerelementen einer Trägeranordnung angeordneten und über Isolierbeschichtungen bezüglich diesen abgestützten Heizleiter einer Heizleiteranordnung;
- Fig. 4: eine der Fig. 3 entsprechende Ansicht einer alternativen Ausgestaltungsart.

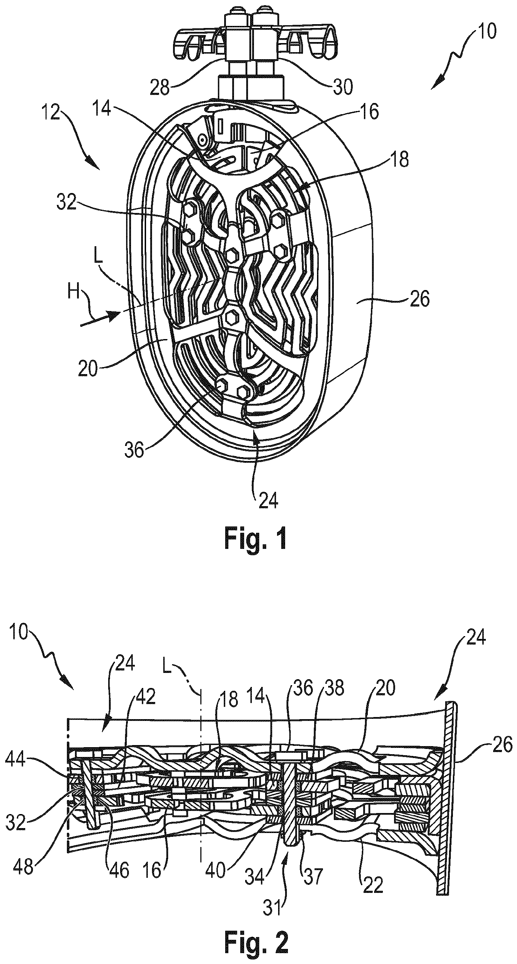

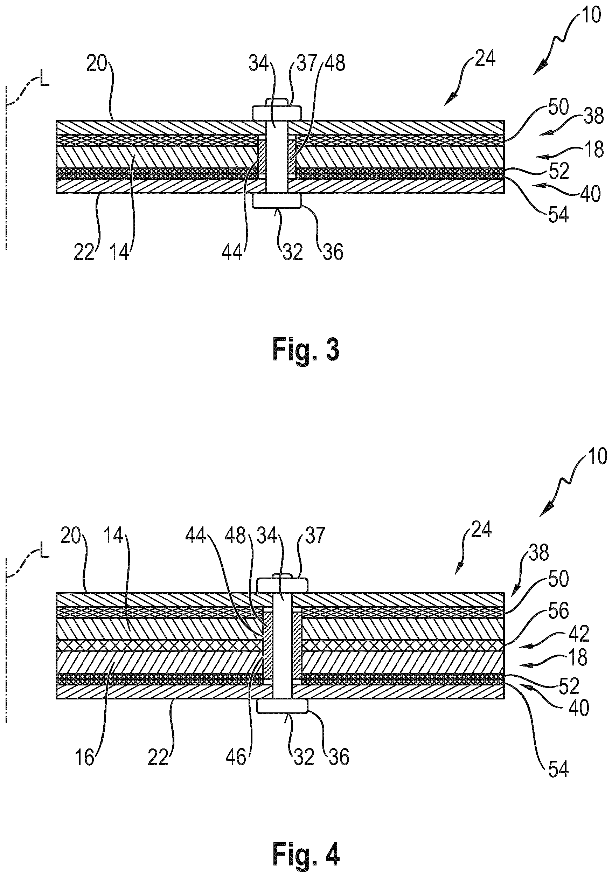

Bevor mit Bezug auf die Fig. 3 und 4 die erfindungsgemäße Art und Weise der elektrisch isolierten Halterung einer Heizleiteranordnung an einer Trägeranordnung eines Abgasheizers detailliert beschrieben wird, wird mit Bezug auf die Fig. 1 und 2 der grundsätzliche Aufbau eines derartigen Abgasheizers 10 für eine Abgasanlage 12 einer Brennkraftmaschine, beispielsweise an einem Kraftfahrzeug, beschrieben.

Der Abgasheizer 10 ist in der Abgasanlage 12 von Abgas in einer Abgas-Hauptströmungsrichtung H durchströmbar und weist zwei in Richtung einer Abgasheizer-Längsachse L aufeinander folgend angeordnete und somit von im Wesentlichen in der Abgas-Hauptströmungsrichtung H strömendem Abgas nacheinander umströmbare Heizleiter 14, 16 einer allgemein mit 18 bezeichneten Heizleiteranordnung auf. Die Heizleiter 14, 16 sind im Wesentlichen plattenartig bzw. aus Flachmaterial aufgebaut und können mit ihrer mit einer Mehrzahl von in mäanderartiger Struktur verlaufenden Abschnitten bereitgestellten Struktur durch Heraustrennen aus einem Flachmaterialrohling, insbesondere einem Metallrohling, erzeugt werden.

An den in Richtung der Abgasheizer-Längsachse L voneinander abgewandt liegenden Seiten der beiden Heizleiter 14, 16 sind im Wesentlichen plattenartig gestaltete Trägerelemente 20, 22 einer allgemein mit 24 bezeichneten Trägeranordnung vorgesehen. An ihrem Außenumfangsbereich sind die plattenartigen Trägerelemente 20, 22 an einem im Wesentlichen zylindrischen Trägergehäuse 26 festgelegt.

Die beiden Heizleiter 14, 16 können zueinander seriell oder parallel geschaltet sein.

Zur elektrischen Verbindung mit einer Spannungsquelle sind zwei das Trägergehäuse 26 durchsetzende Anschlusseinheiten 28, 30 vorgesehen, welche in dem von dem Trägergehäuse 26 umgebenen Innenraum mit den Heizleitern 14, 16 elektrisch leitend verbunden sind.

Zum Erhalt eines stabilen Verbundes sind die beiden Trägerelemente 20, 22 und die dazwischen angeordneten, einander unmittelbar benachbart liegenden Heizleiter 14, 16 durch eine Mehrzahl von bolzenartig ausgebildeten Verbindungselementen 32 fest miteinander verbunden. Die Verbindungselemente 32 können beispielsweise als Schraubbolzen mit einem Schaft 34 und einem Kopf 36 ausgebildet sein. Auf den Schaft 34 kann beispielsweise ein Mutterelement 37 aufgeschraubt sein, um den geschichteten Aufbau aus Trägerelementen 20, 22 und Heizleitern 14, 16 zwischen dem Kopf 36 und dem Mutterelement 37 einzuspannen.

Um eine elektrische Isolierung der Heizleiter 14, 16 bezüglich der im Allgemeinen aus Metallmaterial aufgebauten Trägerelemente 20, 22 der Trägeranordnung 24 zu erreichen, ist zwischen dem Heizleiterelement 14 und dem Trägerelement 20 beispielsweise in Zuordnung zu jedem Verbindungselement 32 eine mit elektrisch isolierendem Material, beispielsweise Keramikmaterial, aufgebaute, im Wesentlichen plattenartig ausgebildete und von dem zugeordneten Verbindungselement 32 im Bereich einer darin vorgesehenen Öffnung durchsetzte Trägeranordnung-Abstützeinheit 38 vorgesehen. Gleichmaßen ist beispielsweise in Zuordnung zu jedem Verbindungselement 32 eine zwischen dem Heizleiter 16 und dem Trägerelement 22 angeordnete Trägerelement-Abstützeinheit 40 vorgesehen.

Um die beiden nebeneinander liegenden Heizleiter 14, 16 bezüglich einander elektrisch isoliert abzustützen, ist beispielsweise in Zuordnung zu jedem Verbindungselement 32 eine Heizleiter-Abstützeinheit 42 vorgesehen. Auch jede Heizleiter-Abstützeinheit 42 ist im Wesentlichen plattenartig mit einer oder mehreren Scheiben ausgebildet und mit Keramikmaterial aufgebaut.

Dort, wo die Heizleiter 14, 16 von dem Verbindungselement 32 im Bereich jeweiliger Verbindungselementöffnungen 44, 46 durchsetzt sind, können in in den Heizleitern 14, 16 gebildete Verbindungselementöffnungen 44, 46 hülsenartige Isolierelemente 48 beispielweise aus Keramikmaterial eingesetzt sein, um eine definierte Positionierung des Verbindungselements 32 in den in den Heizleitern 14, 16 vorgesehenen Öffnungen zu erreichen.

Nachfolgend wird mit Bezug auf die Fig. 3 und 4 detailliert beschrieben, wie gemäß den Prinzipien der vorliegenden Erfindung in einem Abgasheizer 10 mit dem vorangehend hinsichtlich seiner grundsätzlichen Struktur beschriebenen Aufbau die Heizleiteranordnung 18 vermittels der verschiedenen Abstützeinheiten 38, 40, 42 in Richtung der Abgasheizer-Längsachse L elektrisch isoliert gestützt werden kann, ohne dazu als separate Bauteile zwischen verschiedene Komponenten des Abgasheizers eingesetzte Abstützeinheiten zu nutzen.

Bei dem in Fig. 3 ausschnittsweise dargestellten erfindungsgemäßen Aufbau eines Abgasheizers 10 umfasst die Heizleiteranordnung 18 einen einzigen zwischen den beiden Trägerelementen 20, 22 der Trägeranordnung 24 angeordneten Heizleiter 14. Dieser ist bezüglich der beiden Trägerelemente 20, 22 durch in Form von Isolierbeschichtungen bereitgestellten Trägeranordnung-Abstützeinheiten 38, 40 elektrisch isoliert abgestützt. Dabei sind, wie nachfolgend erläutert, bei der Abstützung des Heizleiters 14 bezüglich des Trägerelements 20 und der Abstützung des Heizleiters 14 bezüglich des Trägerelements 22 verschiedene Ausgestaltungsvarianten dargestellt, die jeweils wechselweise vertauscht sein könnten bzw. einzeln in jedem der beiden Abstützbereiche realisiert sein könnten.

Die Trägeranordnung-Abstützeinheit 38 umfasst in dem in Fig. 3 dargestellten Beispiel eine auf das Trägerelement 20 aufgebrachte Isolierbeschichtung 50. Die Isolierbeschichtung 50 kann im Wesentlichen die gesamte dem Heizleiter 14 zugewandte Oberfläche des Trägerelements 20 überdecken oder kann nur die Bereiche des Trägerelements 20 überdecken, mit welchen das Trägerelement 20 am Heizleiter 14 abgestützt ist. Eine feste Verbindung der Isolierbeschichtung 50 bezüglich des Heizleiters 14 besteht nicht, so dass grundsätzlich beispielsweise thermisch induzierte oder durch Vibrationen hervorgerufene Relativbewegungen zwischen dem Heizleiter 14 und dem Trägerelement 20 bzw. der daran vorgesehenen Isolierbeschichtung 50 ermöglicht sind. Bei einer nicht erfindungsgemäßen Abwandlung könnte die Isolierbeschichtung 50 an der dem Trägerelement 20 zugewandten Seite des Heizleiters 14 beispielsweise diesen im Wesentlichen vollflächig überdeckend oder nur an den in Abstützwechselwirkung mit dem Trägerelement 20 stehenden Bereichen des Trägerelements 14 vorgesehen sein.

Im Abstützweg des Heizleiters 14 zum Trägerelement 22 umfasst die Trägeranordnung-Abstützeinheit 40 zwei Isolierbeschichtungen 52, 54. Dabei ist die Isolierbeschichtung 52 auf die dem Trägerelement 22 zugewandte Seite des Heizleiters 14 aufgebracht, während die Isolierbeschichtung 54 auf die dem Heizleiter 14 zugewandte Seite des Trägerelements 22 aufgebracht ist. Auch die Isolierbeschichtungen 52, 54 können die diese jeweils tragenden Komponenten, also den Heizleiter 14 bzw. das Trägerelement 22, im Wesentlichen vollflächig überdeckend vorgesehen sein, oder können nur an den Bereichen vorgesehen sein, in welchen der Heizleiter 14 und das Trägerelement 22 in Abstützwechselwirkung miteinander sind bzw. treten.

Um auch eine Isolierung bezüglich der die Trägeranordnung 24 mit der Heizleiteranordnung 18 zusammenhaltenden Verbindungselemente 32 zu erreichen, können diese in den die zugeordneten Verbindungselementöffnungen 44 im Heizleiter 14 durchsetzenden Längenbereichen von dem hülsenartigen Isolierelement 48, beispielsweise aus Keramikmaterial, umgeben sein. Um ein gegenseitiges Stören mit der bzw. den Isolierbeschichtungen 50, 52 bzw. 54 zu vermeiden, können diese dort, wo im Heizleiter 14 eine Verbindungselementöffnung 44 gebildet ist, unterbrochen sein, um Raum zur Aufnahme von über den Heizleiter 14 axial hervorstehenden Abschnitten eines jeweiligen Isolierelements 48 bereitzustellen.

Eine Ausgestaltungsform, bei welcher die Heizleiteranordnung 18 zwei in Richtung der Abgasheizer-Längsachse L aufeinander folgende Heizleiter 14, 16 umfasst, ist in Fig. 4 dargestellt. Auch bei der in Fig. 4 dargestellten Ausgestaltung eines Abgasheizers 10 kann die zwischen dem Trägerelement 20 und dem Heizleiter 14 angeordnete erste Trägeranordnung-Abstützeinheit 38 eine auf das Trägerelement 20 oder den Heizleiter 14 aufgebrachte Isolierbeschichtung 50 umfassen. Alternativ könnte auf jedes Element von Trägerelement 20 und Heizleiter 14 eine Isolierbeschichtung aufgebracht sein.

Der Heizleiter 16 ist im dargestellten Beispiel über die beiden Isolierbeschichtungen 52, 54 elektrisch isoliert am Trägerelement 22 abgestützt, wobei die Isolierbeschichtung 52 auf den Heizleiter 16 aufgebracht ist und die Isolierbeschichtung 54 auf das Trägerelement 22 aufgebracht ist. Alternativ könnte in diesem Bereich eine einzige Isolierbeschichtung beispielsweise auf das Trägerelement 22 oder den Heizleiter 16 aufgebracht sein.

Die eine elektrische Isolierung und axiale Abstützung der beiden Heizleiter 14, 16 bezüglich einander bereitstellende Heizleiter-Abstützeinheit 42 umfasst eine Isolierbeschichtung 56, welche auf den Heizleiter 14 oder den Heizleiter 16 aufgebracht sein kann. Alternativ könnte auch in diesem Bereich auf jeden der Heizleiter 14, 16 eine Isolierbeschichtung aufgebracht sein, wobei mit diesen beiden Isolierbeschichtungen die beiden Heizleiter 14, 16 dann bezüglich einander elektrisch isoliert axial aneinander abgestützt sind.

Der Schaft 34 des bzw. jedes Verbindungselements 32 ist in dem die Verbindungselementöffnungen 44, 46 der Heizleiter 14, 16 durchsetzenden Längenbereich derselben von dem hülsenartigen Isolierelement 48, beispielsweise aus Keramikmaterial, umgeben und somit in diesem Längenbereich elektrisch bezüglich der Heizleiter 14, 16 isoliert.

Die Isolierbeschichtungen 50, 52, 54, 56 können mit im Stand der Technik bekannten Maßnahmen auf die jeweils zugeordneten Komponenten, also die Trägerelemente 20, 22 bzw. die Heizleiter 14, 16, aufgebracht werden. Beispielsweise kann dieses Aufbringen durch Gasphasenabscheidung erfolgen. Alternativ kann das Aufbaumaterial der Isolierbeschichtungen 50, 52, 54, 56 in einem fließfähigen Zustand auf die zu beschichtenden Bereiche der Oberflächen der betroffenen Bauteile aufgebracht werden und dann thermisch oder/und chemisch aushärten. Das Isoliermaterial kann beispielsweise Keramikmaterial sein, welches einerseits eine vergleichsweise hohe mechanische Stabilität aufweist, andererseits bei hoher Temperaturfestigkeit eine sehr gute elektrische Isolierwirkung bereitstellt, auch bei Einsatz vergleichsweise dünner Isolierbeschichtungen.

Da bei einem erfindungsgemäß aufgebauten Abgasheizer sowohl die elektrische Isolierung als auch die axiale Abstützung verschiedener Komponenten des Abgasheizers durch Isolierbeschichtungen realisiert ist, die jeweils nur zu einer der bezüglich einander abzustützenden Komponenten eine feste Verbindung aufweisen, nämlich derjenigen Komponente, auf welche diese aufgebracht sind, ist bei aneinander abgestützten Komponenten eine Relativbewegbarkeit derselben bezüglich einander gewährleistet, so dass eine übermäßige mechanische Belastung der die Abstützung realisierenden und durch Beschichtungen bereitgestellten Abstützeinheiten vermieden ist. Gleichwohl kann durch den Einsatz hochtemperaturfester Aufbaumaterialien, wie z. B. anorganische Isolationsmaterialien auf Keramikbasis, auch bei hohen Temperaturen eine mechanisch stabile elektrische Isolierung bereitgestellt werden.

Da die Isolierbeschichtungen 50, 52, 54, 56 im Wesentlichen auf beliebige Oberflächenbereiche der damit zu beschichtenden Komponenten aufgebracht werden können, ist es beispielsweise auch möglich, den bzw. die Heizleiter 14, 16 im Bereich der jeweiligen Verbindungselementöffnungen 44, 46 zu beschichten, um auf diese Art und Weise auch eine elektrische Isolierung bezüglich der diese Verbindungselementöffnungen 44, 46 durchsetzenden Verbindungselemente 32 zu erhalten. Es kann dann auf den Einsatz der auch eine elektrische Isolierung bereitstellenden Isolierelemente 48 verzichtet werden bzw. es können dann anstelle der Isolierelemente 48 kostengünstigere und elektrisch nicht isolierende Hülsen eingesetzt werden, deren primäre Funktion die radiale Zentrierung der Verbindungselemente 32 in den jeweiligen Verbindungselementöffnungen 44, 46 ist.

## Patentansprüche

1. Abgasheizer für eine Abgasanlage einer Brennkraftmaschine, umfassend:
- eine Trägeranordnung (24),
- eine an der Trägeranordnung (24) getragene Heizleiteranordnung (18) mit wenigstens einem stromdurchflossenen Heizleiter (14, 16), wobei wenigstens ein Heizleiter (14, 16) bezüglich der Trägeranordnung (24) durch wenigstens eine Trägeranordnung-Abstützeinheit (38, 40) elektrisch isoliert getragen ist oder/und wobei wenigstens ein Heizleiter (14) bezüglich eines weiteren Heizleiters (16) durch eine Heizleiter-Abstützeinheit (42) elektrisch isoliert getragen ist,
**dadurch gekennzeichnet, dass** wenigstens eine Trägeranordnung-Abstützeinheit (38, 40) eine auf die Trägeranordnung (24) aufgebrachte Isolierbeschichtung (50, 54) umfasst.

2. Abgasheizer nach Anspruch 1, **dadurch gekennzeichnet, dass** wenigstens eine Trägeranordnung-Abstützeinheit (38, 40) eine auf den über diese Trägeranordnung-Abstützeinheit (38, 40) an der Trägeranordnung (24) abgestützten Heizleiter (14, 16) aufgebrachte Isolierbeschichtung (52) umfasst.

3. Abgasheizer nach Anspruch 1 oder 2, **dadurch gekennzeichnet, dass** wenigstens eine Heizleiter-Abstützeinheit (42) eine auf einen der durch diese Heizleiter-Abstützeinheit (42) bezüglich einander abgestützten Heizleiter (14, 16) aufgebrachte Isolierbeschichtung (56) oder/und eine auf den anderen der durch diese Heizleiter-Abstützeinheit (42) bezüglich einander abgestützten Heizleiter (14, 16) aufgebrachte Isolierbeschichtung umfasst.

4. Abgasheizer nach einem der Ansprüche 1-3, **dadurch gekennzeichnet, dass** wenigstens eine, vorzugsweise jede Isolierbeschichtung (50, 52, 54, 56) durch Abscheiden oder Auftragen in fließfähigem Zustand aufgebracht ist.

5. Abgasheizer nach einem der Ansprüche 1-4, **dadurch gekennzeichnet, dass** wenigstens eine, vorzugsweise jede Isolierbeschichtung (50, 52, 54, 56) mit anorganischem Isoliermaterial, vorzugsweise Keramikmaterial, aufgebaut ist.

6. Abgasheizer nach einem der Ansprüche 1-5, **dadurch gekennzeichnet, dass** die Trägeranordnung (24) zwei die Heizleiteranordnung (18) in Richtung einer Abgasheizer-Längsachse (L) zwischen sich aufnehmende Trägerelemente (20, 22) umfasst, und dass wenigstens eine, vorzugsweise jede Trägeranordnung-Abstützeinheit (38, 40) eine auf eines der Trägerelemente (20, 22) aufgebrachte Isolierbeschichtung (50, 54) umfasst.

7. Abgasheizer nach einem der Ansprüche 1-6, **dadurch gekennzeichnet, dass** wenigstens eine, vorzugsweise jede Trägeranordnung-Abstützeinheit (38, 40) eine auf einen Heizleiter (14, 16) der Heizleiteranordnung (18) aufgebrachte Isolierbeschichtung (52) umfasst.

8. Abgasheizer nach einem der Ansprüche 1-7, **dadurch gekennzeichnet, dass** die Heizleiteranordnung (18) vermittels einer Mehrzahl bolzenartiger Verbindungselemente (32) mit der Trägeranordnung (24) verbunden ist, wobei wenigstens ein, vorzugsweise jedes Verbindungselement (32) wenigstens einen, vorzugsweise jeden Heizleiter (14, 16) der Heizleiteranordnung (18) im Bereich einer Verbindungselementöffnung (44, 46) durchsetzt, und dass wenigstens ein, vorzugsweise jedes Verbindungselement (32) in seinem eine Verbindungselementöffnung (44, 46) durchsetzenden Längenbereich von einem Isolierelement (48) umgeben ist.

9. Abgasanlage für eine Brennkraftmaschine, umfassend wenigstens einen Abgasheizer (10) nach einem der Ansprüche 1-8.

## Claims

1. An exhaust gas heater for an exhaust gas system of an internal combustion engine, comprising:
- a carrier arrangement (24),
- a heating-conductor arrangement (18), carried on the carrier arrangement (24) and having at least one heating conductor (14, 16) through which a current flows, wherein at least one heating conductor (14, 16) is carried in an electrically insulated manner with respect to the carrier arrangement (24) by at least one carrier-arrangement supporting unit (38, 40) and/or wherein at least one heating conductor (14) is carried in an electrically insulated manner with respect to a further heating conductor (16) by a heating-conductor supporting unit (42),
**characterized in that** at least one carrier-arrangement supporting unit (38, 40) comprises an insulating coating (50, 54) applied to the carrier arrangement (24).

2. The exhaust gas heater as claimed in claim 1, **characterized in that** at least one carrier-arrangement supporting unit (38, 40) comprises an insulating coating (52) applied to a heating conductor (14, 16) supported at the carrier arrangement (24) by way of this carrier-arrangement supporting unit (38, 40).

3. The exhaust gas heater as claimed in claim 1 or 2, **characterized in that** at least one heating-conductor supporting unit (42) comprises an insulating coating applied to one of the heating conductors (14, 16) supported with respect to one another by this heating-conductor supporting unit (42) and/or an insulating coating applied to the other of the heating conductors (14, 16) supported with respect to one another by this heating-conductor supporting unit (42).

4. The exhaust gas heater as claimed in one of claims 1-3, **characterized in that** at least one, preferably each insulating coating (50, 52, 54, 56) has been applied by deposition or application in a flowable state.

5. The exhaust gas heater as claimed in one of claims 1-4, **characterized in that** at least one, preferably each insulating coating (50, 52, 54, 56) is constructed from inorganic insulating material, preferably ceramic material.

6. The exhaust gas heater as claimed in one of claims 1-5, **characterized in that** the carrier arrangement (24) comprises two carrier elements (20, 22), receiving the heating-conductor arrangement (18) between them in the direction of a longitudinal axis (L) of the exhaust gas heater, and **in that** at least one, preferably each carrier-arrangement supporting unit (38, 40) comprises an insulating coating (50, 54) applied to one of the carrier elements (20, 22).

7. The exhaust gas heater as claimed in one of claims 1-6, **characterized in that** at least one, preferably each carrier-arrangement supporting unit (38, 40) comprises an insulating coating (52) applied to a heating conductor (14, 16) of the heating-conductor arrangement (18).

8. The exhaust gas heater as claimed in one of claims 1-7, **characterized in that** the heating-conductor arrangement (18) is connected to the carrier arrangement (24) by means of a plurality of bolt-like connecting elements (32), wherein at least one, preferably each connecting element (32) passes through at least one, preferably each heating conductor (14, 16) of the heating-conductor arrangement (18) in the region of a connecting-element opening (44, 46), and **in that** at least one, preferably each connecting element (32) is surrounded by an insulating element (48) in the region of its length that passes through a connecting-element opening (44, 46).

9. An exhaust gas system for an internal combustion engine, comprising at least one exhaust gas heater (10) as claimed in one of claims 1-8.

## Revendications

1. Un réchauffeur de gaz d'échappement pour un système de gaz d'échappement d'un moteur à combustion interne, comprenant :
- un agencement porteur (24),
- un agencement de conducteur de chaleur (18), porté par l'agencement porteur (24) et comportant au moins un conducteur de chaleur (14, 16) traversé par un courant, dans lequel au moins un conducteur de chaleur (14, 16) est porté de manière électriquement isolée par rapport à l'agencement porteur (24) par au moins une unité de support d'agencement porteur (38, 40) et/ou dans lequel au moins un conducteur de chaleur (14) est porté de manière électriquement isolée par rapport à un autre conducteur de chaleur (16) par une unité de support de conducteur de chaleur (42),
**caractérisé en ce qu'**au moins une unité de support d'agencement porteur (38, 40) comprend un revêtement isolant (50, 54) appliqué à l'agencement porteur (24).

2. Le réchauffeur de gaz d'échappement selon la revendication 1, **caractérisé en ce qu'**au moins une unité de support d'agencement porteur (38, 40) comprend un revêtement isolant (52) appliqué à un conducteur de chaleur (14, 16) supporté à l'agencement porteur (24) par le biais de cette unité de support d'agencement porteur (38, 40).

3. Le réchauffeur de gaz d'échappement selon la revendication 1 ou 2, **caractérisé en ce qu'**au moins une unité de support de conducteur de chaleur (42) comprend un revêtement isolant appliqué à l'un des conducteurs de chauffage (14, 16) supportés l'un par rapport à l'autre par cette unité de support de conducteur de chaleur (42) et/ou un revêtement isolant appliqué à l'autre des conducteurs de chauffage (14, 16) supportés l'un par rapport à l'autre par cette unité de support de conducteur de chaleur (42).

4. Le réchauffeur de gaz d'échappement selon l'une des revendications 1 à 3, **caractérisé en ce qu'**au moins un, de préférence chaque revêtement isolant (50, 52, 54, 56) a été appliqué par dépôt ou application à l'état fluide.

5. Le réchauffeur de gaz d'échappement selon l'une des revendications 1 à 4, **caractérisé en ce qu'**au moins un, de préférence chaque revêtement isolant (50, 52, 54, 56) est constitué d'un matériau isolant inorganique, de préférence un matériau céramique.

6. Le réchauffeur de gaz d'échappement selon l'une des revendications 1 à 5, **caractérisé en ce que** l'agencement porteur (24) comprend deux éléments porteurs (20, 22), recevant l'agencement de conducteur de chaleur (18) entre eux dans la direction d'un axe longitudinal (L) du réchauffeur de gaz d'échappement, et **en ce qu'**au moins une, de préférence chaque unité de support d'agencement porteur (38, 40) comprend un revêtement isolant (50, 54) appliqué à l'un des éléments porteurs (20, 22).

7. Le réchauffeur de gaz d'échappement selon l'une des revendications 1 à 6, **caractérisé en ce qu'**au moins une, de préférence chaque unité de support d'agencement porteur (38, 40) comprend un revêtement isolant (52) appliqué à un conducteur de chaleur (14, 16) de l'agencement de conducteurs de réchauffeur (18).

8. Le réchauffeur de gaz d'échappement selon l'une des revendications 1 à 7, **caractérisé en ce que** l'agencement de conducteur de chaleur (18) est relié à l'agencement porteur (24) au moyen d'une pluralité d'éléments de connexion (32) en forme de boulons, dans lesquels au moins un, de préférence chaque élément de connexion (32) passe à travers au moins un, de préférence chaque conducteur de chaleur (14, 16) de l'agencement de conducteur de chaleur (18) dans la zone d'une ouverture d'élément de connexion (44, 46), et **en ce qu'**au moins un, de préférence chaque élément de connexion (32) est entouré d'un élément isolant (48) dans la zone de sa longueur qui passe à travers une ouverture d'élément de connexion (44, 46).

9. Un système de gaz d'échappement pour un moteur à combustion interne, comprenant au moins un réchauffeur de gaz d'échappement (10) selon l'une des revendications 1 à 8.
